# EUROPÄISCHE PATENTSCHRIFT

(11) **EP 0 592 909 B1**
(45) Veröffentlichungstag und Bekanntmachung des Hinweises auf die Patenterteilung: **02.01.1997**
(21) Anmeldenummer: 93115977.6
(22) Anmeldetag: 04.10.1993
(51) Int. Cl.: H02G 3/16, H01R 23/02

(54) **Anschlussdose für abgeschirmte Kabel, insbesondere für Datenübertragungskabel**
Connection box for shielded cable, specifically for information transfer
Cable de raccordement pour cable blindé plus, particulièrement pour transfer d'information

(30) Priorität: 13.10.1992 DE 4234451; 20.03.1993 DE 4309039
(43) Veröffentlichungstag der Anmeldung: 20.04.1994
(73) Patentinhaber: BTR BLUMBERGER TELEFON- UND RELAISBAU ALBERT METZ, D-78176 Blumberg (DE)
(72) Erfinder: Müller, Karl, D-78166 Donaueschingen (DE); Jaag, Dieter, D-78050 Villingen-Schwenningen (DE)
(74) Vertreter: Patentanwälte Westphal, Buchner, Mussgnug Neunert, Göhring

(56) Entgegenhaltungen:
- DE-U- 9 012 784
- US-A- 2 968 689

## Beschreibung

Die Erfindung betrifft eine Anschlußdose für abgeschirmte Kabel, insbesondere für Datenübertragungskabel gemäß dem Oberbegriff des Anspruchs 1.

Bei Datenübertragungssystemen, wie digitalen Kommunikationssystemen, vernetzten Computersystemen usw. wird zunehmend angestrebt, die Endgeräte über Anschlußdosen steckbar anzuschließen. Die Trennung der Datenübertragungskabel durch die Steckverbindung der Anschlußdose bedeutet eine wesentliche Erhöhung des Wellenwiderstandes, so daß insbesondere bei höheren Übertragungsraten und damit höheren Frequenzen starke Dämpfungsverluste auftreten.

Zum Anschließen der Datenübertragungskabel an die Steckerbuchse der Anschlußdose muß die Schirmung des Kabels entfernt werden. Dadurch kann die Datenleitung Störsignale auffangen und wirkt bei höheren Übertragungsfrequenzen selbst als Antenne, die Störsignale aussendet.

Aus der DE-U-90 12 784 ist eine Anschlußdose für Telekommunikationsanlagen bekannt, deren Gehäuse aus einem Sockelunterteil und einem Sockeloberteil aus Kunststoff besteht. Zwischen dem Sockelunterteil und dem Sockeloberteil ist eine Leiterplatte gehalten, auf welcher einerseits Anschlußklemmen für das anzuschließende Kabel und andererseits Steckerbuchsen für die anzuschließenden Endgeräte angeordnet sind. Die Leiterplatte dient gleichzeitig zur leitenden Verbindung der Anschlußklemmen mit den Steckerbuchsen. Das Kunststoffgehäuse der Anschlußdose hat keine abschirmende Wirkung. Auch die anzuschließenden Kabel sind nicht abgeschirmt. Die Anschlußdose eignet sich daher nicht für Datenübertragungssysteme, bei welchen auch hohe Frequenzen störungsfrei übertragen werden müssen.

Der Erfindung liegt das Problem zugrunde, eine Anschlußdose für geschirmte Kabel zur Verfügung zu stellen, die sich insbesondere für Datenübertragungssysteme eignet und eine störungsfreie Übertragung auch bei hohen Frequenzen ermöglicht.

Dieses Problem wird erfindungsgemäß gelöst durch eine Anschlußdose mit den Merkmalen des Anspruchs 1.

Vorteilhafte Ausführungsformen der Erfindung sind in den Unteransprüchen angegeben.

Erfindungsgemäß weist die Anschlußdose ein geschlossenes Gehäuse aus Metalldruckguß auf. Dieses Gehäuse kapselt als Abschirmung alle Teile der Anschlußdose, in welchen die Adern des Kabels frei liegen. Dadurch wird verhindert, daß Störsignale aufgefangen und ausgesandt werden. Die Schirmung der an die Anschlußdose angeschlossenen Kabel ist mit gutem elektrischem Kontakt über das leitende Gehäuse zu der Steckerbuchse geführt, so daß sich eine durchgehende Schirmung mit minimalem ohmschen Widerstand von dem angeschlossenen Kabel bis zu einem in die Steckerbuchse eingesteckten Stecker ergibt. Diese durchgehende Schirmung führt zu einem niedrigen Wellenwiderstand der Steckverbindung, so daß auch hohe Übertragungsraten bzw. hohe Frequenzen mit geringer Dämpfung übertragen werden können.

Um eine optimale Kapselung zu erhalten, besteht das Gehäuse aus einem Sockelunterteil und einem Sockeloberteil aus Metalldruckguß, vorzugsweise Zinkdruckguß, die fest miteinander verschraubt sind. Die Verschraubung mittels gewindeformender Schrauben ergibt einen hohen Kontaktdruck zwischen Sockelunterteil und Sockeloberteil und ergibt eine zusätzliche leitende Verbindung über die Schrauben. Sockeloberteil und Sockelunterteil greifen über den gesamten Umfang übereinander, so daß keine durchgehende Stoßfuge zwischen Sockeloberteil und Sockelunterteil vorhanden ist, über welche Störsignale ausgesandt werden könnten.

Damit bei der Installation der Anschlußdose Sockeloberteil und Sockelunterteil nicht getrennt werden müssen, ist die Anschlußklemme für das anzuschließende Kabel außerhalb der Kapselung von Sockeloberteil und Sockelunterteil angeordnet und somit leicht zugänglich. Die Anschlußklemme ist durch einen gesonderten leitenden Deckel abgeschirmt.

Um die Schirmung von dem angeschlossenen Kabel zu der Steckerbuchse mit minimalem ohmschen Widerstand zu führen, wird die Schirmung des Kabels unter Druck an das leitende Gehäuse gepreßt. Das Gehäuse steht wiederum unter Druck und vorzugsweise über zusätzliche Kontaktspitzen mit der leitenden Kaschierung der Leiterplatte in Berührung. Mit der Leiterplatte ist wiederum die Schirmung der Steckerbuchse verlötet.

Die Anschlußdose kann als Aufputz- oder Unterputzdose ausgebildet sein. In der Ausbildung als Unterputzdose ist das Gehäuse mit einem Montagering versehen, der gegebenenfalls aus Kunststoff hergestellt sein kann, um ein Überkoppeln von Störungen von der Gebäudewand zu verhindern.

Im folgenden wird die Erfindung anhand von in der Zeichnung dargestellten Ausführungsbeispielen näher erläutert. Es zeigen:
- Figur 1: eine Draufsicht auf die Anschlußdose mit aufgesetzter Abdeckkappe,
- Figur 2: einen Schnitt gemäß der Linie II-II in Figur 1,
- Figur 3: eine Seitenansicht der Dose in Figur 1 von rechts ohne Abdeckkappe,
- Figur 4: eine Draufsicht auf die Anschlußdose ohne Abdeckkappe,
- Figur 5: eine Seitenansicht der Anschlußdose in Figur 1 von oben ohne Abdeckkappe,
- Figur 6: eine Unteransicht der Anschlußdose,
- Figur 7: einen Schnitt gemäß der Linie VII-VII in Figur 6,
- Figur 8: eine Figur 4 entsprechende Darstellung einer zweiten Ausführungsform der Anschlußdose,
- Figur 9: eine Figur 4 entsprechende Darstellung einer dritten Ausführungsform der Anschlußdose,
- Figur 10: eine Figur 3 entsprechende Seitenansicht der Anschlußdose der Figur 9,
- Figur 11: eine Figur 6 entsprechende Darstellung mit angeschlossenen Kabeln,
- Figur 12: eine Figur 1 entsprechende Darstellung einer vierten Ausführungsform der Anschlußdose mit zwei Steckerbuchsen,
- Figur 13: einen Schnitt gemäß der Linie XIII-XIII in Figur 12,
- Figur 14: eine Seitenansicht der Anschlußdose von rechts in Figur 12 ohne Abdeckkappe,
- Figur 15: eine Draufsicht auf die Anschlußdose der Figur 12 ohne Abdeckkappe,
- Figur 16: im Schnitt ein Detail der Verbindung von Sockeloberteil und Sockelunterteil,
- Figur 17: einen Schnitt gemäß der Linie XVII-XVII in Figur 16,
- Figur 18: einen Figur 2 entsprechenden Schnitt einer fünften Ausführungsform der Anschlußdose,
- Figur 19: eine Unteransicht der Anschlußdose der Figur 18,
- Figur 20: einen Teilschnitt des Sockelunterteils der Anschlußdose gem. der Linie XX-XX in Figur 19,
- Figur 21: eine Stirnansicht des Sockelunterteils der fünften Ausführungsform,
- Figur 22: eine Unteransicht der fünften Ausführungsform der Anschlußdose mit der Bodenabschirmung,
- Figur 23: eine Draufsicht auf das Sockelunterteil mit Leiterplatte,
- Figur 24: eine Unteransicht einer sechsten Ausführungsform der Anschlußdose mit einer abgewandelten Kontaktierung der Kabelschirmung,
- Figur 25: einen Teilschnitt des Sockelunterteils gem. der Linie XXV-XXV in Figur 24,
- Figur 26: eine Stirnansicht eines Schirmkontaktteiles dieser Kontaktierung,
- Figur 27: einen Schnitt durch das Schirmkontaktteil gem. der Linie XXVII-XXVII in Figur 26,
- Figur 28: eine Seitenansicht des Schirmkontaktteiles,
- Figur 29: eine perspektivische Darstellung der Steckerbuchse der Anschlußdose,
- Figur 30: einen Figur 2 ensprechenden Schnitt einer siebten Ausführungsform der Anschlußdose und
- Figur 31: eine Draufsicht auf die Anschlußdose der Figur 30 ohne Abdeckkappe.

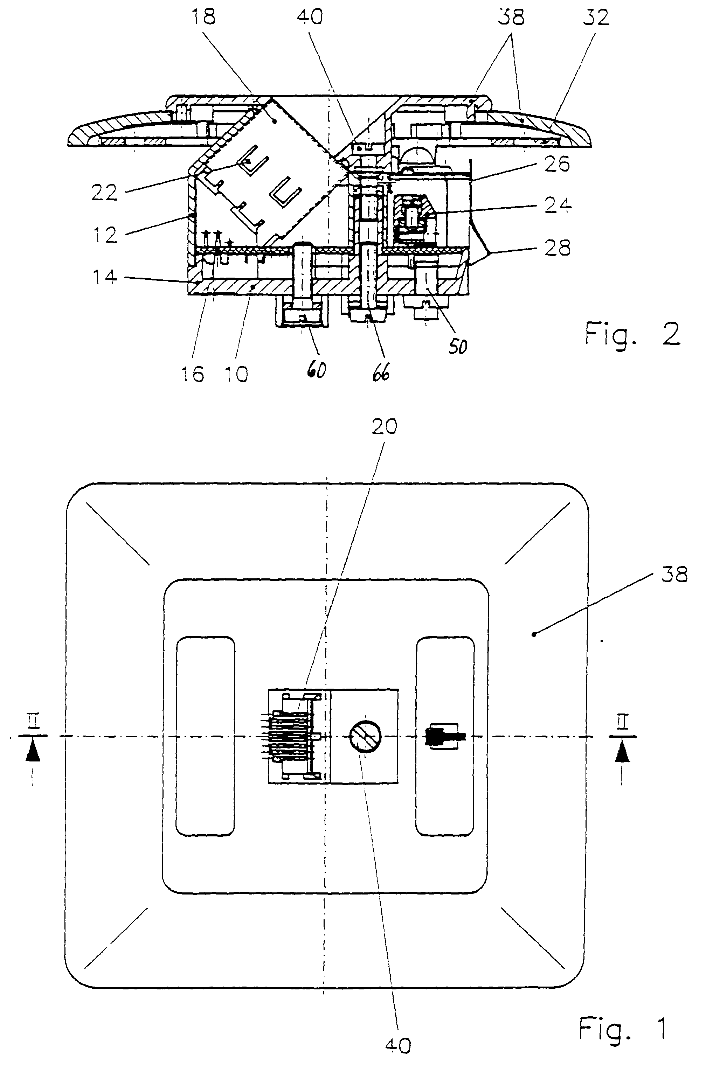

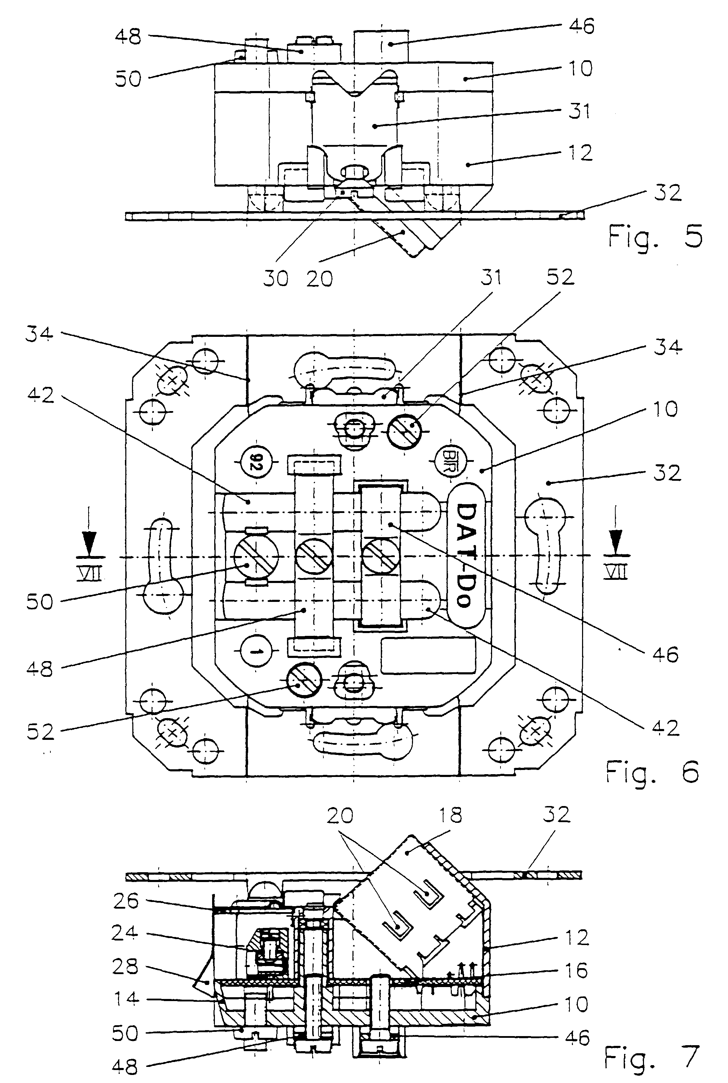

Zunächst wird die Erfindung anhand des Ausführungsbeispiels der Figuren 1 bis 7 im einzelnen beschrieben.

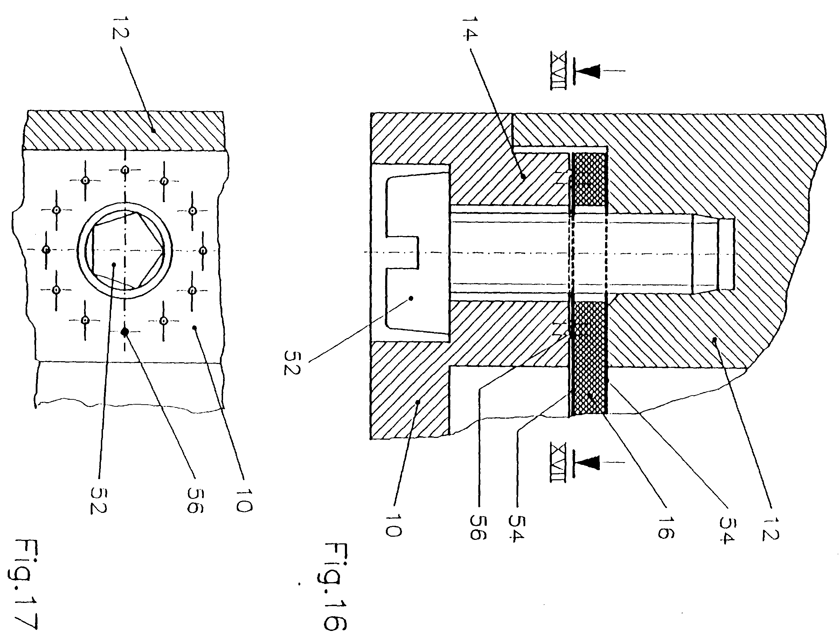

Die Anschlußdose weist ein Sockelunterteil 10 und ein Sockeloberteil 12 auf, die jeweils als Zinkdruckguß-Teile hergestellt sind. Das Sockelunterteil 10 hat im wesentlichen die Form einer Platte mit einem am Umfang ausgebildeten nach oben stehenden Rand 14. Das Sockeloberteil 12 umschließt einen Aufnahmeraum und sitzt auf dem Rand 14 des Sockelunterteils 10 auf. Der Rand 14 ist dabei abgestuft, wie am deutlichsten in Figur 16 zu erkennen ist, so daß das Sockeloberteil 12 den Rand 14 übergreift. Dadurch wird eine geradlinig durchgehende Fuge zwischen Sockelunterteil 10 und Sockeloberteil 12 vermieden und Sockelunterteil 10 und Sockeloberteil 12 schließen an dem gesamten Umfang dicht ab. Sockelunterteil 10 und Sockeloberteil 12 bilden somit ein geschlossenes metallisches Gehäuse, dessen Innenraum gegen elektrische Felder abgeschirmt ist.

Auf das Sockelunterteil 10 ist eine Leiterplatte 16 aufgesetzt, die parallel zur Ebene des Sockelunterteils 10 angeordnet ist und zwischen Sockelunterteil 10 und Sockeloberteil 12 gehalten wird, wie im Detail aus Figur 16 ersichtlich ist. Auf der Leiterplatte 16 ist eine aus einem Blechstanzteil geformte Aufnahme 18 angeordnet, in die eine Steckerbuchse 20 für den Stecker 96 eines Datenkabels eingesetzt wird. Die Steckerbuchse 20 entspricht dem jeweils verwendeten Steckverbinder-System. Im dargestellten Ausführungsbeispiel ist die Steckerbuchse 20 als Western-Buchse ausgebildet. Ebenso kann die Buchse eines Subminiatur-Steckverbinders verwendet werden. Die Aufnahme 18 mit der Steckerbuchse 20 befindet sich vollständig in dem geschlossenen geschirmten Gehäuse, welches durch das Sockelunterteil 10 und das Sockeloberteil 12 gebildet ist.

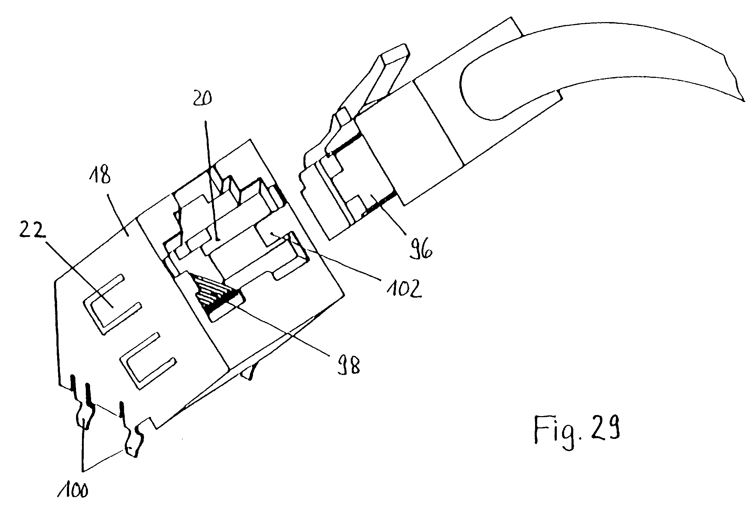

In Figur 29 ist perspektivisch die Aufnahme 18 für die Steckerbuchse 20 dargestellt. Die Steckerbuchse 20 ist ein Kunststoffteil, mit einer im Querschnitt dem Stecker 96 angepaßten Einstecköffnung. In der Einstecköffnung sind die federnden Kontakte 98 angeordnet. Die Aufnahme 18 ist aus einem dünnen Blech gebogen und umschließt die Steckerbuchse 20 an den vier Seitenflächen sowie an der Stirnfläche rings um die Einstecköffnung. Am hinteren Ende der Steckerbuchse 20 ist das Blech der Aufnahme 18 über den Körper der Steckerbuchse 20 hinaus mit zwei seitlichen Schenkeln verlängert, an welchen Lötfahnen 100 angeformt sind, die in die Leiterplatte 16 eingesetzt und mit deren Masse-Bahnen verlötet werden. An der Stirnseite greift das Blech der Aufnahme 18 mit zwei Federzungen 102 in die Einstecköffnung der Steckerbuchse 20 hinein. Die Federzungen 102 sind elastisch in die Einstecköffnung hineingespreizt, so daß sie sich unter Federdruck an dem Schirmblech des Steckers 96 anlegen und die Abschirmung des Steckerkabels mit gutem Kontakt mit der Aufnahme 18 und damit der Abschirmung der Anschlußdose verbinden. An den Seitenflächen der Aufnahme 18 sind jeweils Lappen 22 ausgeschnitten, die nach außen von der Aufnahme 18 federnd abgespreizt sind. Die Lappen 22 kommen damit unter Federdruck elektrisch leitend mit dem Sockeloberteil 12 in Kontakt und stellen die Verbindung der Abschirmung von Gehäuse und Steckverbinder her. Sind zwei Steckerbuchsen 20 in der Anschlußdose nebeneinander vorgesehen, so kommen die Lappen 22 der Aufnahmen 18 dieser beiden Steckerbuchsen 20 federnd miteinander in Berührung, um einen guten leitenden Kontakt zwischen den beiden Aufnahmen 18 und dem Sockeloberteil 12 herzustellen.

Eine Aussparung in der Außenkontur des Sockeloberteils 12 läßt einen Randstreifen des Sockelunterteils 10 frei. Im Bereich dieses Randstreifens ragt die Leiterplatte 16 unter dem Sockeloberteil 12 vor, so daß sie außerhalb des durch Sockelunterteil 10 und Sockeloberteil 12 gebildeten geschlossenen Gehäuses an der Oberseite des Sockelunterteils 10 freiliegt. Auf diesem freiliegenden Randstreifen der Leiterplatte 16 ist eine mehrpolige Anschlußklemme 24 aufgesetzt, die im dargestellten Ausführungsbeispiel als Schraubklemme ausgebildet ist. Die Pole der Anschlußklemme 24 (im dargestellten Ausführungsbeispiel acht Pole) sind über Leiterbahnen der Leiterplatte 16 mit den Kontakten der Steckerbuchse 20 leitend verbunden.

Der in dem Sockeloberteil 12 ausgesparte Raum oberhalb des Sockelunterteils 10 und der Leiterplatte 16, welcher die Anschlußklemme 24 aufnimmt, wird durch einen aus einem rechtwinklig abgekanteten Blech gebildeten Deckel 26 abgeschlossen. Der Deckel 26 wird mit seinem oberen, zur Leiterplatte 16 parallelen Schenkel an der Oberkante des Sockeloberteils 12 einschnappend eingehängt, wobei sich die freie Kante des anderen Schenkels des Deckels 26 unter leichtem elastischem Druck außen an den Rand 14 des Sockelunterteils 10 anlegt. An seinen beiden seitlichen Enden schließt der Deckel 26 an vorspringenden Wangen des Sockeloberteils 12 an. Der Deckel 26 steht auf diese Weise leitend mit dem Gehäuse in Verbindung und umschließt abschirmend den die Anschlußklemme 24 aufnehmenden Raum. An seiner am Rand 14 anliegenden Kante weist der Deckel 26 eine Auswölbung 28 auf, durch welche in später beschriebener Weise das anzuschließende Kabel zu der Anschlußklemme 24 geführt wird.

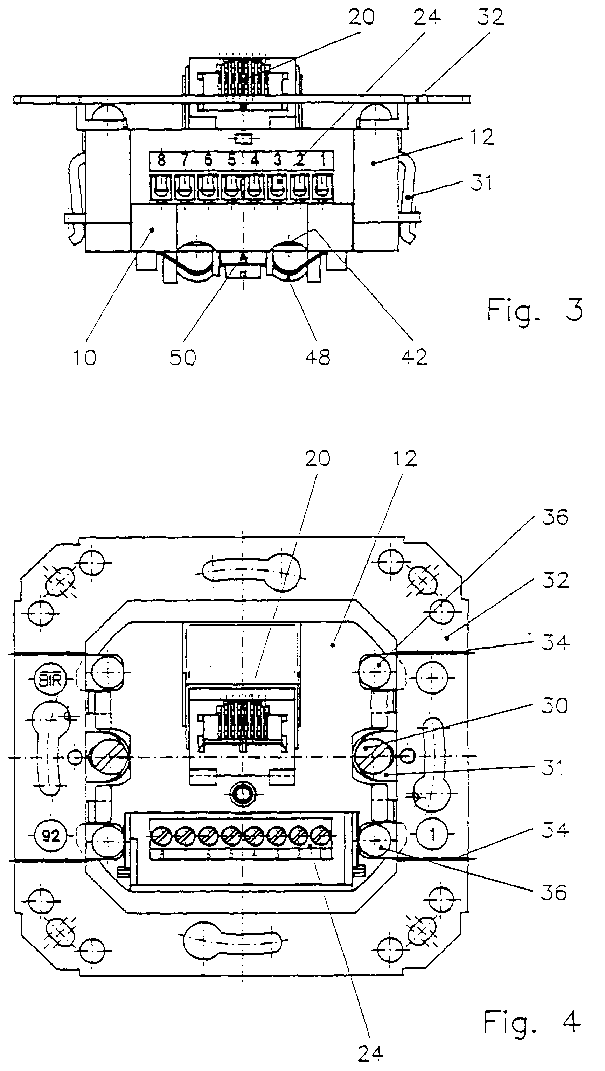

An dem Sockeloberteil 12 sind mittels Schrauben 30 abspreizbare Krallen 31 zur Befestigung in einer Unterputz-Leerdose angebacht. Auf der Oberseite des Sockeloberteils 12 sind Pfeiler 36 angeformt, auf die ein Montagering 32 genietet ist. Der Montagering 32 umschließt das Gehäuse flanschartig an dessen gesamtem Umfang. In dieser Ausführung des Montagerings 32 eignet sich die Anschlußdose zur Befestigung in einer Unterputz-Leerdose. Wie Figur 4 zeigt, weist der Montagering 32 Sollbruchlinien 34 auf, an welchen die beiden Teile des Montageringes 32 an der Seite der Steckerbuchse 20 bzw. der Seite der Anschlußklemme 24 weggebrochen werden können. Werden diese Teile weggebrochen, so bleiben nur die beiden Teile beiderseits der Steckerbuche 20 bzw. der Anschlußklemme 24 stehen. Dadurch eignet sich die Anschlußdose zur Montage in einem Kabelkanal.

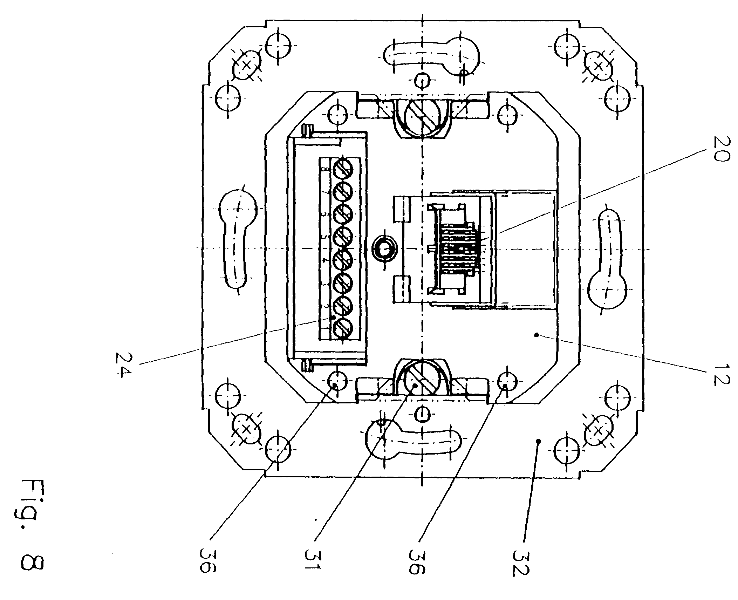

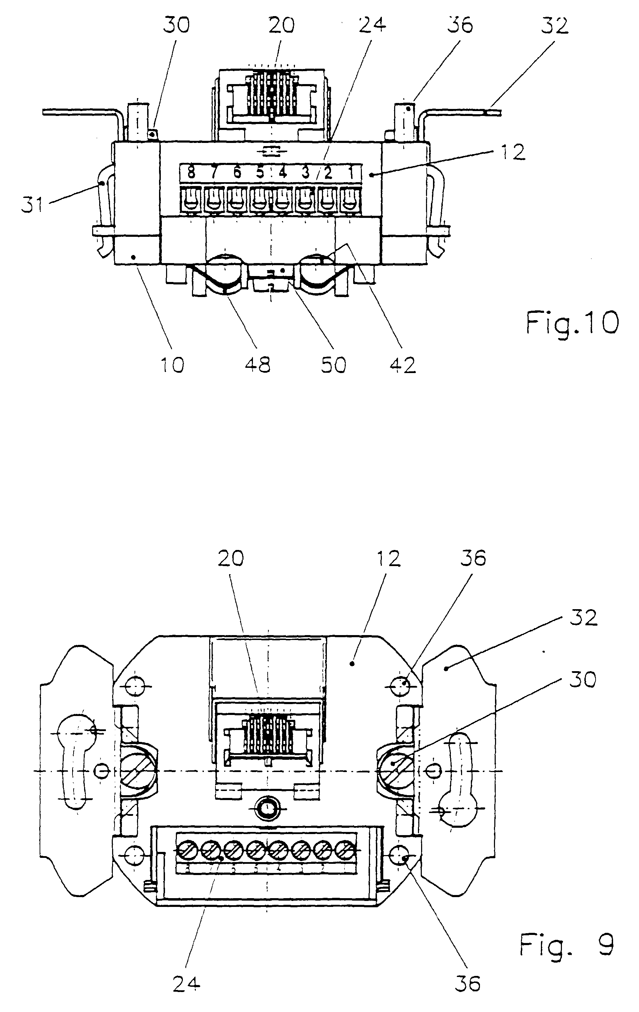

In der in Figur 8 gezeigten zweiten Ausführungsform weist der Montagering 32 keine solchen Sollbruchlinien auf, so daß er nur für die Montage in eine Unterputz-Leerdose geeignet ist. In dem dritten Ausführungsbeispiel der Figuren 9 und 10 sind nur beiderseits von Steckerbuchse 20 und Anschlußklemme 24 Segmente des Montageringes 32 vorgesehen, so daß sich diese Ausführung insbesondere für die Montage in Kabelkanälen eignet. Im übrigen stimmen die zweite Ausführungsform der Figur 8 und die dritte Ausführungsform der Figuren 9 und 10 mit der Ausführungsform der Figuren 1 bis 7 überein.

Der Montagering 32 ist in üblicher Weise ein Blechstanzteil. In einer abgewandelten Ausführung kann der Montagering 32 in den Ausführungsformen der Figuren 4, 8 oder 9 auch als Kunststoffteil ausgebildet sein. Die Verwendung von Kunststoff für den Montagering 32 verhindert die Übertragung von elektrischen Störsignalen von der Gebäudewand über den Montagering 32 auf das aus Sockelunterteil 10 und Sockeloberteil 12 gebildete Gehäuse.

Auf den Montagering 32 wird eine Abdeckkappe 36 aufgesetzt, die mittels einer Schraube 40 an dem Sockeloberteil 12 befestigt wird und nur die Einstecköffnung der Steckerbuchse 20 frei läßt.

An der Unterseite des Sockelunterteils 10 sind zwei Aufnahmerinnen 42 für ein ankommendes und ein wegführendes abgeschirmtes Kabel 44 vorgesehen. Die Aufnahmerinnen 42 werden von einem Zugentlastungsbügel 46 und einem Kontaktbügel 48 übergriffen, die jeweils mittels einer zwischen den Aufnahmerinnen 42 angeordneten Schraube 60 bzw. 66 an dem Sockelunterteil 10 angebracht sind. Der Zugentlastungsbügel 46 ist ein stabiler Stahlbügel, während der Kontaktbügel 48 ein federnder Metallbügel ist.

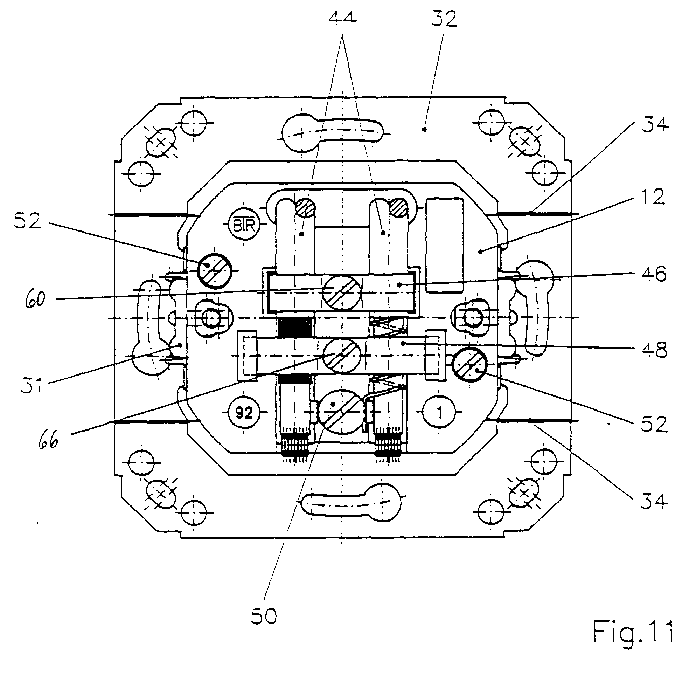

Aus Figur 11 ist ersichtlich, wie die Kabel 44 angeschlossen werden. An den anzuschließenden Enden der Kabel 44 werden stufenweise die Außenisolierung, die Abschirmung und die Innenisolierung entfernt. Die Kabel 44 werden dann in die Aufnahmerinnen 42 gelegt, wobei der Zugentlastungsbügel 46 auf der Außenisolierung der Kabel 44 aufliegt und die Kabel 44 zur Zugentlastung an dem Sockelunterteil 10 festklemmt. Der Kontaktbügel 48 liegt auf dem anschließenden Bereich mit freigelegter Schirmung auf und stellt die elektrisch leitende Verbindung zwischen der Schirmung der Kabel 44 und dem Sockelunterteil 10 her. Die Federeigenschaften des Kontaktbügels 48 gewährleisten dabei einen guten und zuverlässigen Kontakt zwischen dem Sockelunterteil 10 und der Schirmung des Kabels 44, auch wenn die Schirmung infolge der Alterung des Kunststoffes der Innenisolierung nachgibt. Im Bereich des Kontaktbügels 48 können die Aufnahmerinnen 42 und/oder der Kontaktbügel 48 mit Querrippen versehen sein, die sich in die Schirmung der Kabel 44 eindrücken und einen zuverlässigen Kontakt gewährleisten. Die Schirmung kann aus einem Geflecht bestehen, wie dies bei dem linken Kabel 44 in Figur 11 dargestellt ist oder aus einer Bedampfung mit einem Beidraht, wie dies bei dem rechten Kabel 44 in Figur 11 gezeigt ist. In dem an den Kontaktbügel 48 anschließenden Bereich ist eine Klemmschraube 50 in das Sockelunterteil 10 eingedreht. Der Kopf der Klemmschraube 50 sitzt zwischen zwei von der Oberfläche des Sockelunterteils 10 vorspringenden Führungslappen, so daß mittels der Klemmschraube 50 der Beidraht der Kabelschirmung festgeklemmt werden kann, wie dies in Figur 11 für das rechte Kabel 44 gezeigt ist. Die von der Schirmung befreiten Kabel 44 werden um die Kante des Sockelunterteils 10 herumgelegt, so daß die Adern der Kabel 44 an der Anschlußklemme 24 angeschlossen werden können. Nach dem Anschließen der Adern an der Anschlußklemme 44 wird der Deckel 26 aufgesetzt, wobei die Auswölbung 28 den Durchtritt der Kabel 44 zwischen dem Sockelunterteil 10 und dem Deckel 26 ermöglicht.

Die Adern der Kabel 44 sind über die Anschlußklemme 24, und die Leiterbahnen der Leiterplatte 16 mit den Lötpins der Steckerbuchse 20 und damit den Kontakten der Steckerbuchse 20 verbunden.

Die Schirmung der Kabel 44 ist durch den Druck des Kontaktbügels 48 und über dessen Schraube 66 mit dem Sockelunterteil 10 leitend verbunden. Das Sockelunterteil 10 ist wiederum mit der Leiterplatte 16 und dem Sockeloberteil 12 leitend verbunden. Mit der Leiterplatte 16 ist wiederum die Aufnahme 18 mittels der Lötfahnen 100 verlötet. Schließlich steht die Aufnahme 18 über die Lappen 22 mit dem Sockeloberteil 12 und über die Federzungen 102 mit der Schirmung eines in die Steckerbuchse 20 eingesteckten Steckers 96 in leitender Verbindung.

In den Figuren 16 und 17 ist im Detail gezeigt, wie die elektrisch leitende Verbindung zwischen Sockelunterteil 10, Sockeloberteil 12 und Leiterplatte 16 hergestellt wird. In das Sockelunterteil 10 sind zwei diametral zueinander angeordnete gewindeformende Schrauben 52 nahe am Umfang eingesetzt. Die Schrauben 52 durchgreifen Bohrungen der Leiterplatte 16, die zwischen dem Sockelunterteil 10 und dem Sockeloberteil 12 gehalten ist. Die Schrauben 52 sind mittels ihres gewindeformenden Schaftes in das Sockeloberteil 12 eingedreht. Die Zylinderkopfschrauben 52 verspannen dabei das Sockelunterteil 10 gegen das Sockeloberteil 12, so daß sich das Sockeloberteil 12 unter Pressung und damit unter gutem elektrischem Kontakt auf dem Rand 14 des Sockelunterteils 10 abstützt. Weiter wird durch die sich in das Sockeloberteil 12 eingrabenden Gewindegänge der Schrauben 52 ein guter elektrisch leitender Kontakt zwischen dem Sockeloberteil 12 und den Schrauben 52 hergestellt, der wiederum durch den Zylinderkopf der Schrauben 52 auf das Sockelunterteil 10 weitergeführt wird. Die Leiterplatte 16 wird unter Druck zwischen dem Sockelunterteil 10 und dem Sockeloberteil 12 festgeklemmt, so daß sowohl zwischen dem Sockelunterteil 10 und der unteren Kupfer-Kaschierung 54 der Leiterplatte 16 als auch zwischen dem Sockeloberteil 12 und der oberen Kupfer-Kaschierung 54 ein guter elektrischer Kontakt erzeugt wird. Zur Verbesserung des Kontaktes sind an der Fläche des Sockelunterteils 10, auf welcher die Leiterplatte 16 aufliegt, rings um die Bohrung für die Schrauben 52 Spitzen 56 angeformt, die in die Kupfer-Kaschierung 54 der Leiterplatte 16 eindringen und für einen optimalen leitenden Kontakt zwischen dem Sockelunterteil 10 und der Leiterplatte 16 sorgen.

Die Anschlußdose ergibt somit eine durchgehende elektrisch leitende Verbindung zwischen der Schirmung der Kabel 44 und der Schirmung eines Kabels, welches mittels eines in die Steckerbuchse 20 eingesteckten Steckers 96 angeschlossen wird. Diese elektrisch leitende Verbindung führt von der Schirmung des Kabels 44 über den Kontakt mit dem Sockelunterteil 10 und dem Kontaktbügel 48 zum Sockelunterteil 10, vom Sockelunterteil 10 über die Kontaktfläche und insbesondere die Spitzen 56 zur Kupfer-Kaschierung 54 der Leiterplatte 16, von dieser Kupferkaschierung 54 über die Lötfahnen 100 zu der die Steckerbuchse 20 umschließenden Aufnahme 18 und über deren Federzungen 102 22 zu der Schirmung des Kabelsteckers. Durch diese leitende Verbindung der Schirmung kann der Wellenwiderstand der Verbindung von dem Kabel 44 zu dem in die Anschlußdose eingesteckten Kabel wesentlich kleiner als 250 mΩ gehalten werden.

Weiter ergibt sich durch das geschlossene metallische Gehäuse aus Sockelunterteil 10 und Sockeloberteil 12, die fugenlos aufeinandersitzen, und durch den Deckele 26 eine vollständige abschirmende Kapselung der Anschlußdose, so daß auch hohe Frequenzen von etwa 20 MHz störungsfrei übertragen werden können, wie sie bei Datenübertragungen mit Baudraten von etwa 16 Mbit/sec. auftreten.

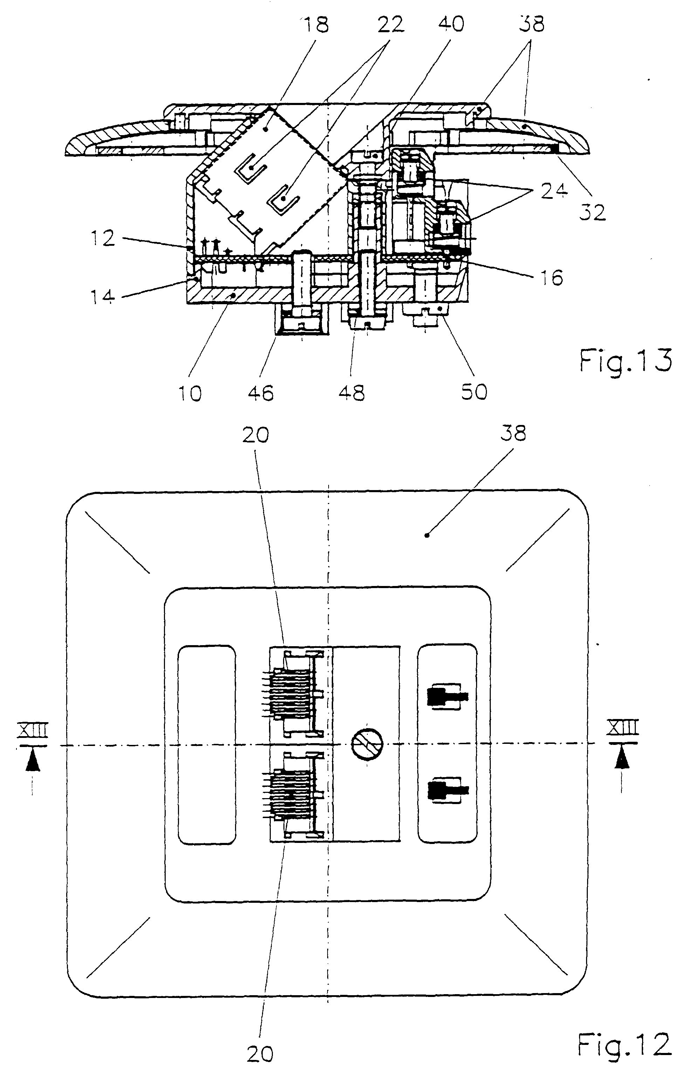

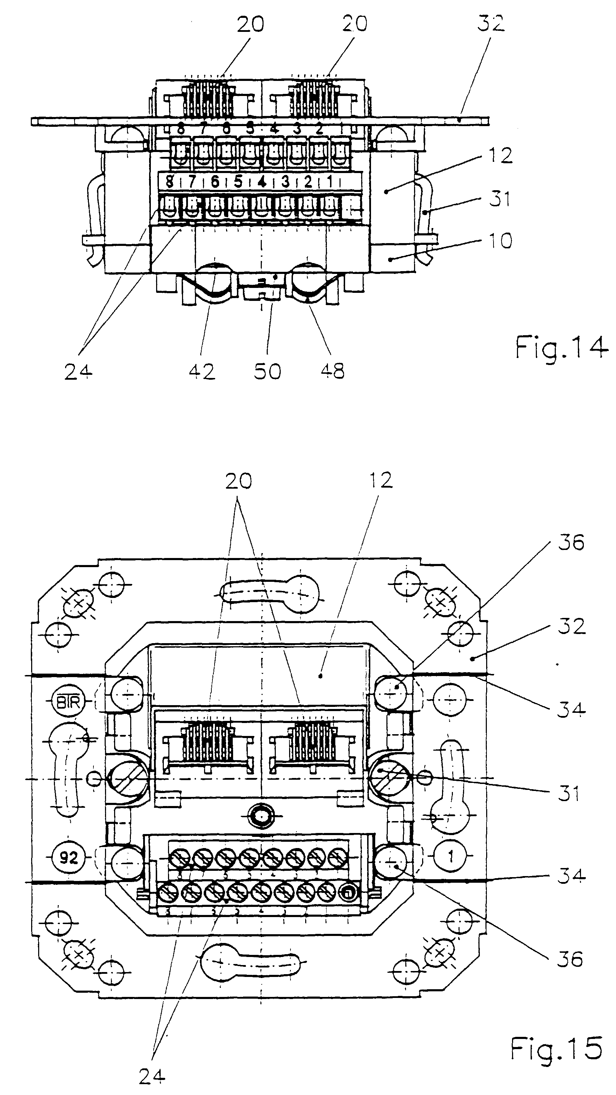

In den Figuren 12 bis 15 ist eine entsprechende Anschlußdose mit zwei Steckerbuchsen 20 dargestellt. Der Aufbau der Anschlußdose entspricht dem des Ausführungsbeispiels der Figuren 1 bis 7, so daß auf die dortige Beschreibung Bezug genommen werden kann. Ein Unterschied ergibt sich nur insofern, als zwei Steckerbuchsen 20 nebeneinander angeordnet sind und zwei treppenstufenförmig übereinander angeordnete Anschlußklemmen 24 vorgesehen sind, die jeweils den beiden Steckerbuchsen 20 zugeordnet sind.

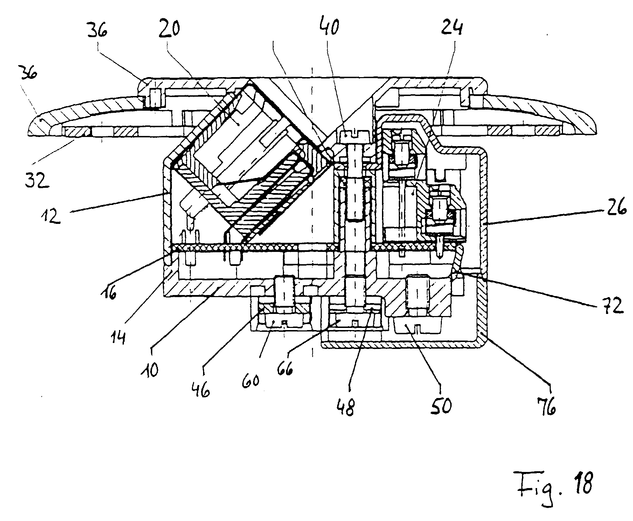

In den Figuren 18 bis 23 ist ein fünftes Ausführungsbeispiel der Anschlußdose gezeigt. Soweit nachfolgend nicht anders beschrieben, stimmt dieses mit den vorangehenden Ausführungsbeispielen überein und es sind übereinstimmende Bezugszeichen verwendet.

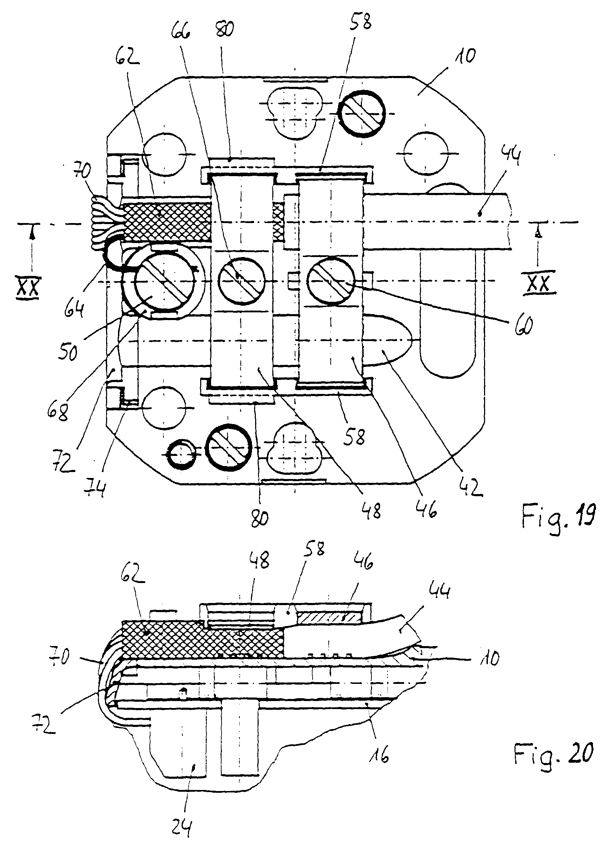

Wie Figur 19 zeigt, sind an der Unterseite des Sockelunterteils 10 die zwei Aufnahmerinnen 42 für ein ankommendes und ein wegführendes abgeschirmtes Kabel 44 vorgesehen. Die Kabel 44 werden in die Aufnahmerinnen 42 eingelegt und können durch den Zugentlastungsbügel 46 festgeklemmt werden. Der Zugentlastungsbügel 46 ist ein stabiler Stahlbügel und wird zwischen zwei Führungsleisten 58 so geführt, daß er mittels der in das Sockelunterteil 10 eingreifenden Schraube 60 gegen das Sockelunterteil 10 gezogen werden kann. Die Führungsleisten 58 sind an dem Sockelunterteil 10 angeformt und stehen von dessen Unterseite ab. Der Zugentlastungsbügel 46 übergreift beide Aufnahmerinnen 42 und gegebenenfalls in diese eingelegten Kabel 44. Der Zugentlastungsbügel 46 liegt auf der Außenisolierung der Kabel 44 auf, um diese mechanisch festzuklemmen.

In Figur 19 ist das Anschließen eines Kabels 44 dargestellt, welches ein Drahtgeflecht 62 mit einem Beidraht 64 als Schirmung aufweist. Die Außenisolierung des Kabels 44 wird bis an den Zugentlastungsbügel 46 entfernt. Vor dem Zugentlastungsbügel 46 ist der Kontaktbügel 48 in weiteren Führungen der Führungsleisten 58 angeordnet. Der Kontaktbügel 48 ist ein federnder Metallbügel, der ebenfalls beide Aufnahmerinnen 42 übergreift, auf dem Drahtgeflecht 62 der Schirmung des Kabels 44 aufsitzt und das Drahtgeflecht 62 der Schirmung unter seinem Federdruck gegen das Sockelunterteil 10 drückt. Der Kontaktbügel 48 wird durch die in das Sockelunterteil 10 eingedrehte Schraube 66 gehalten und gespannt.

Vor dem Kontaktbügel 48 ist zwischen den Aufnahmerinnen 42 die Klemmschraube 50 angeordnet, die in eine Erhöhung 68 des Sockelunterteils 10 einschraubbar ist. Mittels der Klemmschraube 50 wird der Beidraht 64 der Schirmung des Kabels 44 in leitender Berührung mit dem Sockelunterteil 10 festgeklemmt.

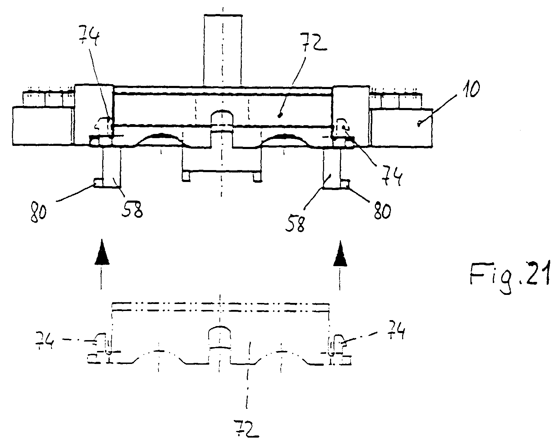

Die Adern 70 des Kabels 44 werden um die Kante des Sockelunterteils 10 herumgeführt und an die auf der Leiterplatte 16 sitzende Anschlußklemme 24 angeschlossen. An der Kante des Sockelunterteils 10, um welche die Adern 70 herumgebogen werden, ist eine Schutzschiene 72 aus einem isolierenden Kunststoff angebracht. Die Schutzschiene erstreckt sich über den Breitenbereich der Kante des Sockelunterteils 10, in dem die Adern 70 liegen. Die Schutzschiene 72 weist an die Aufnahmerinnen 42 anschließende Einwölbungen auf, die die Adern 70 seitlich führen. Wie insbesondere aus Figur 21 ersichtlich ist, weist die Schutzschiene 72 beiderseits Federhaken 74 auf, mit denen sie in Rastvorsprünge des Sockelunterteils 10 eingeschnappt werden kann. Die Schutzschiene 72 verhindert, daß bei Beschädigung der Isolierung der Adern 70 an der Biegestelle, z. B. infolge von Sprödebruch des Kunststoffmaterials der Isolierung, ein leitender Kontakt zwischen den Adern 70 und dem Sockeunterteil 10 entsteht.

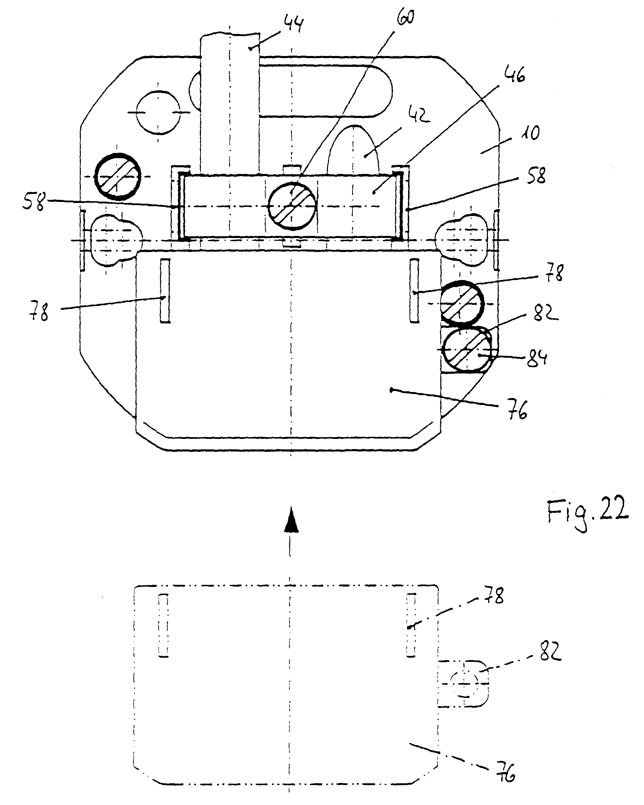

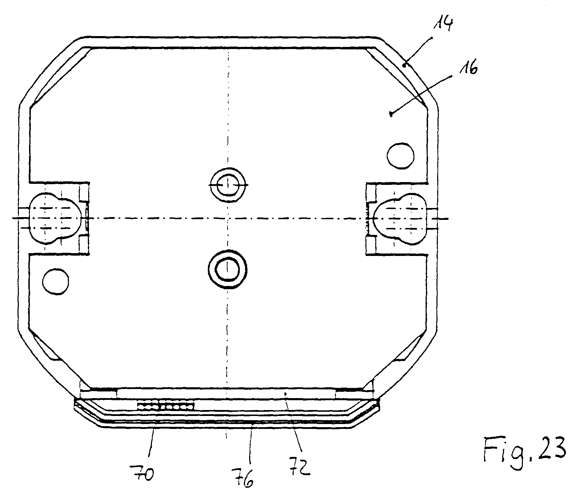

Um die Adern 70 der Kabel 44 im Bereich der fehlenden Kabelschirmung vor Störungen abzuschirmen, ist zusätzlich eine Bodenabschirmung 76 aus Metall vorzugsweise Zinkdruckguß vorgesehen. Die Bodenabschirmung 76 hat die Form einer flachen, zu der Unterseite des Sockelunterteils 10 parallelen Platte, die mit seitlich abgewinkelten Rändern auf der Unterseite des Sockelunterteils 10 aufsitzt. Die Bodenabschirmung 76 wird vom Ende der Kabel 44 her parallel zum Sockelunterteil 10 über die abisolierten Kabelenden geschoben, wobei an der Innenseite der Bodenabschirmung 76 angeformte Vorsprünge 78 unter außen an den Führungsleisten 58 angeformte Vorsprünge 80 greifen, um die Bodenabschirmung 76 an dem Sockelunterteil 10 festzuhalten. Eine seitlich an der Bodenabschirmung 76 angeformte Lasche 82 wird mittels einer Schraube 84 an dem Sockelunterteil 10 angeschraubt, um einen guten leitenden Kontakt zwischen der Bodenabschirmung 76 und dem Sockelunterteil 10 zu gewährleisten. Die Bodenabschirmung 76 reicht mit ihrer in Einschubrichtung vorderen Kante bis unmittelbar an den Zugentlastungsbügel 46, wie aus Figur 22 ersichtlich ist. An der in Einschubrichtung rückwärtigen Kante ist die Bodenabschirmung 76 abgewinkelt und umgreift die mit der Schutzschiene 72 versehene Kante des Sockelunterteils 10, so daß auch die um diese Kante herumgeführten Adern 70 abgeschirmt sind, wie dies in Figur 23 erkennbar ist. Wie aus Figur 18 zu sehen ist, ist der Deckel 26 in dieser Ausführung ebenfalls aus Zinkdruckguß hergestellt. Der Deckel 26 ist vor der Kante des Sockelunterteils 10 heruntergeführt und sitzt stufenförmig überlappend auf dem nach oben greifenen Rand der Bodenabschirmung 76 auf. Die Bodenabschirmung 76 ergibt somit zusammen mit dem Deckel 26 eine vollständige Abschirmung der Adern 70 der Kabel 44 von der Befestigung des Kabels 44 durch den Zugentlastungsbügel 46 bis zu dem Anschluß der Adern 70 an der Anschlußklemme 24.

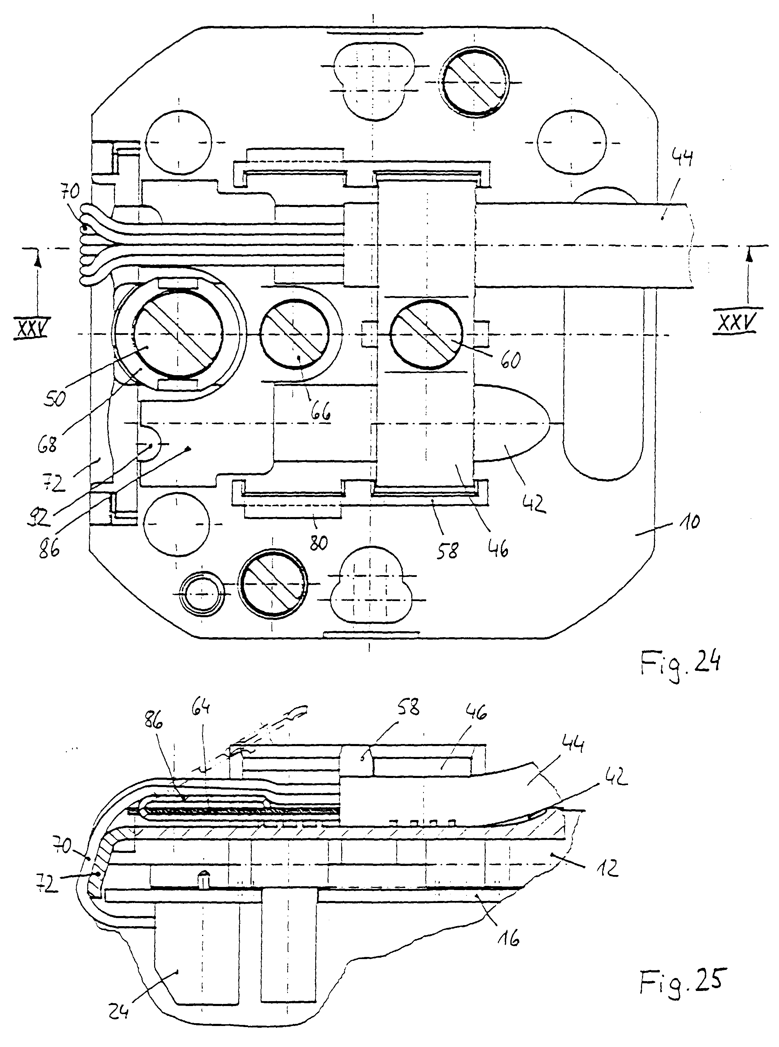

Die Figuren 24 bis 28 zeigen eine sechste Ausführung mit einer Abwandlung der elektrischen Kontaktverbindung zwischen der Schirmung des Kabels 44 und dem aus Sockelunterteil 10 und Sockeloberteil 12 bestehenden Gehäuse.

Bei der Befestigung des Kabels 44 an dem Sockelunterteil 10 können zwischen dem abisolierten Drahtgeflecht 62 des Kabels 44 und dem Sockelunterteil 10 unterschiedliche Kapazitäten auftreten, die das Hochfrequenzverhalten beeinflussen. Aus diesem Grund wird das Drahtgeflecht 62 am Kabelende ebensoweit entfernt wie die Außenisolierung, so daß das Drahtgeflecht 62 der Schirmung nicht über die durch den Zugentlastungsbügel 46 festgeklemmte Außenisolierung des Kabels hinausragt. Nur der Beidraht 64 der Schirmung des Kabels 44 wird zusammen mit den Adern 70 über die Außenisolierung hinausgeführt.

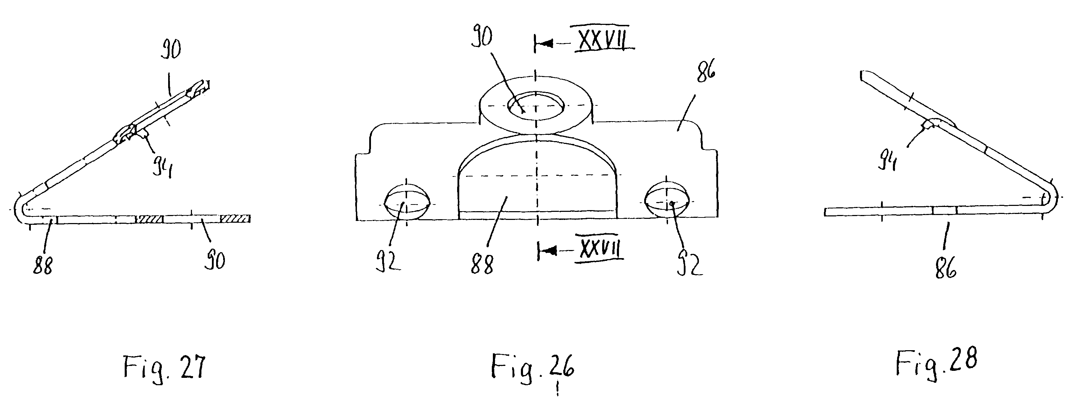

Anstelle des Kontaktbügels 48 wird an der Unterseite des Sockelunterteils 10 ein Schirmkontaktteil 86 angebracht, das in den Figuren 26 bis 28 im einzelnen gezeigt ist. Das Schirmkontaktteil 86 ist als Blechstanzteil ausgebildet, welches um eine Querkante gebogen ist, so daß es zwei unter etwa 30° zueinander angeordnete Schenkel aufweist. Mittig im Bereich der Biegekante ist eine Aussparung 88 vorgesehen, so daß die Klemmschraube 50 und die zugehörige Erhöhung 68 des Sockelunterteils 10 das Aufsetzen des Schirmkontaktteils 86 nicht behindern. An den freien Enden der Schenkel des Schirmkontaktteils 86, die sich gegen den Zugentlastungsbügel 46 öffnen, sind mittig jeweils Bohrungen 90 vorgesehen, in welche die Schraube 66 eingesetzt werden kann. Beiderseits der Aussparung 88 sind im Bereich der Biegekante des Schirmkontaktteils 86 Öffnungen 92 vorgesehen. Der obere Schenkel des Schirmkontaktteils 86 weist an seinem freien Ende beiderseits der Bohrung 90 eine gegen den unteren Schenkel abgebogene Kante 94 auf.

Beim Anschließen des Kabels 44 wird zunächst das Schirmkontaktteil 86 auf das Sockelunterteil 10 gelegt und mittels der durch die Bohrungen 90 geführten Schraube 66 lose an dem Sockelunterteil 10 fixiert. Das Ende des Kabels 44 wird von der Außenisolierung und ebensoweit von dem Drahtgeflecht 62 befreit, so daß nur noch die Adern 70 und der Beidraht 64 der Schirmung aus dem Kabelende herausragen. Das Kabel 44 wird in die Aufnahmerinne 42 gelegt und zunächst lose durch den Zugentlastungsbügel 46 fixiert. Dann wird der Beidraht 64 zwischen den Schenkeln des Schirmkontaktteils 86 hindurch und durch die Öffnung 92 geführt. Die Adern 70 liegen dabei oberhalb des oberen Schenkels des Schirmkontaktteils 86. Nun wird durch Zug an dem Beidraht 64 das Kabel 44 so weit gegen das Schirmkontaktteil 86 gezogen, bis die Außenisolierung des Kabels 44 an das Schirmkontaktteil 86 anschlägt. Nun werden bei gespanntem Beidraht 64 die Schraube 66 des Schirmkontaktteils 86 und die Schraube 60 des Zugentlastungsbügels 46 angezogen. Dadurch wird einerseits das Kabel 44 durch den Zugentlastungsbügel 46 fixiert und andererseits wird der Beidraht 64 zwischen den Schenkeln des Schirmkontaktteils 86 fixiert und durch die Kante 94 zuverlässig kontaktiert. Anschließend werden die Adern 70 an die Anschlußklemme 24 angeschlossen. Das Schirmkontaktteil 86 bewirkt auf diese Weise eine geometrisch exakt definierte Kontaktverbindung zwischen der Schirmung des Kabels 44 und dem Sockelunterteil 10 und damit dem Gehäuse der Anschlußdose. Da die geometrischen Bedingungen zwischen dem Beidraht 64 und dem Sockelunterteil 10 durch das Schirmkontaktteil 86 genau festgelegt sind, ergibt sich ein reproduzierbar genau definiertes Hochfrequenzverhalten.

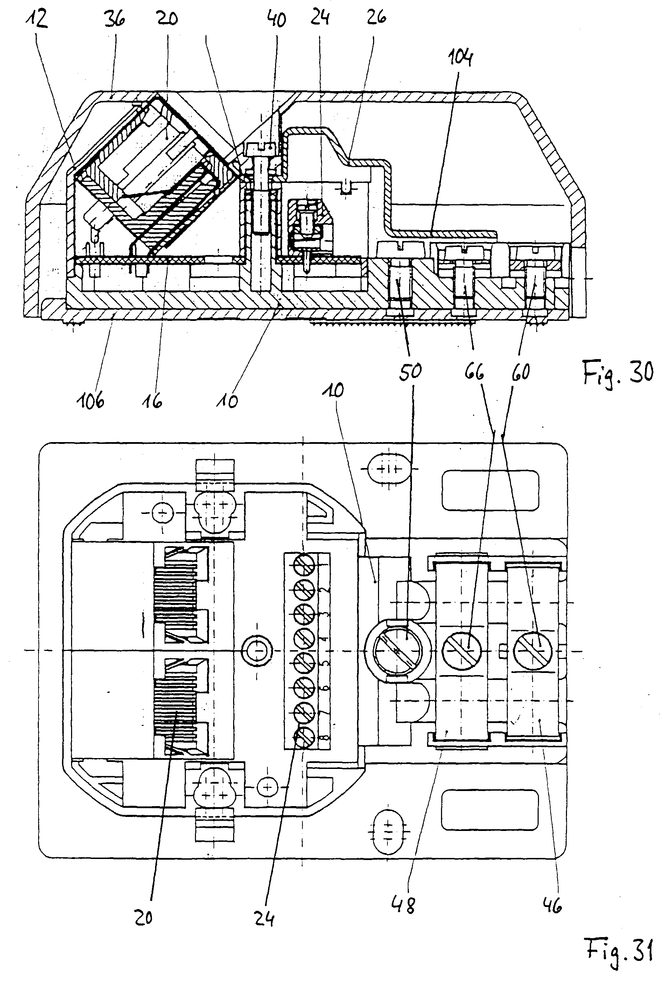

In den Figuren 30 und 31 ist ein siebtes Ausführungsbeispiel der Anschlußdose dargestellt, in welchem die Anschlußdose als Aufputz-Dose ausgebildet ist.

In dieser Ausführungsform ist die Platte des Sockelunterteils 10 über die Anschlußklemme 24 hinaus verlängert. Die Aufnahmerinnen 42 mit dem Zugentlastungsbügel 46, dem Kontaktbügel 48 und der Klemmschraube 50 sind auf der Oberseite dieses verlängerten Abschnittes des Sockelunterteils 10 angeordnet. Im übrigen sind diese Einrichtungen zum Anschließen und Festklemmen der Kabel in identischer Weise ausgebildet, wie dies für das fünfte Ausführungsbeispiel der Figuren 18 bis 23 im einzelnen beschrieben ist. Es kann daher auf die Beschreibung zu diesem fünften Ausführungsbeispiel verwiesen werden.

Da die Kabeladern in dieser Ausführung nicht um die Kante des Sockelunterteils 10 herumgeführt werden müssen, sondern in einer Ebene in die Anschlußklemme 24 geführt werden können, ist auch die Abschirmung der Anschlußklemme 24 und der freiliegenden Adern vereinfacht. Der Deckel 26 ist an seinem nach unten geführten Rand rechtwinklig abgebogen und greift mit einer Verlängerung 104, die parallel zu dem Sockelunterteil 10 verläuft, über die Klemmschraube 50 und den Kontaktbügel 48. Die Verlängerung 104 entspricht somit in ihrer Funktion der Bodenabschirmung 76 des fünften Ausführungsbeispiels.

Die komplette abgeschirmte Anschlußdose kann mittels einer Montageplatte 106 an einer Wand befestigt werden.

## Patentansprüche

1. Anschlußdose für abgeschirmte Kabel, insbesondere für Datenübertragungskabel, mit einem Sockelunterteil (10) und einem Sockeloberteil (12), mit einer zwischen Sockelunterteil (10) und Sockeloberteil (12) gehaltenen Leiterplatte (16) und mit wenigstens einer Steckerbuchse (20) und einer Anschlußklemme (24), die auf der Leiterplatte (16) angeordnet sind und über diese leitend miteinander verbunden sind, dadurch gekennzeichnet, daß das Sockelunterteil (10) und das Sockeloberteil (12) Metalldruckguß-Teile sind, daß das Sockeloberteil (12) an seinem Umfangsrand in elektrisch leitender Berührung auf dem Sockelunterteil (10) aufsitzt, daß das Sockelunterteil (10) und das Sockeloberteil (12) ein zumindest die Steckerbuchse (20) und Teile der Leiterplatte (16) abschirmend umschließendes Gehäuse bilden, daß die Leiterplatte (16) leitend mit dem Gehäuse (10, 12) in Berührung steht, daß eine Schirmung der wenigstens einen Steckerbuchse (20) mit der Leiterplatte (16) leitend verbunden ist und daß die Schirmung eines anzuschließenden Kabels (44) in elektrisch leitender Berührung an dem Sokkelunterteil (10) bzw. dem Sockeloberteil (12) festlegbar ist.

2. Anschlußdose nach Anspruch 1, dadurch gekennzeichnet, daß die Leiterplatte (16) in einem in der Außenkontur des Sokkeloberteils (12) ausgesparten Bereich frei aus dem Sockeloberteil (12) ragt, daß die Anschlußklemme (24) auf diesem freiliegenden Bereich der Leiterplatte (16) angeordnet ist und daß ein elektrisch leitender, mit dem Sockelunterteil (10) und/oder dem Sockeloberteil (12) in leitender Berührung stehender Deckel (26) die Anschlußklemme (24) an den von Sockelunterteil (10) und Sockeloberteil (12) freien Seiten abschirmend abdeckt.

3. Anschlußdose nach Anspruch 1, dadurch gekennzeichnet, daß das Sockelunterteil (10) und das Sockeloberteil (12) sich an dem in Berührung stehenden Umfang überlappen, so daß keine geradlinig durchgehende Berührungsfuge vorhanden ist.

4. Anschlußdose nach Anspruch 1, dadurch gekennzeichnet, daß die Schirmung der wenigstens einen Steckerbuchse (20) eine diese Steckerbuchse (20) umschließende Aufnahme (18) aus elektrisch leitendem Material aufweist, die mit der Leiterplatte (16) verlötet ist.

5. Anschlußdose nach Anspruch 4, dadurch gekennzeichnet, daß die aus Blech gebogene Aufnahme (18) die Steckerbuchse (20) zumindest an den vier Seitenwänden und an der Stirnseite umschließt, daß das Blech der Aufnahme (18) mit wenigstens einer Federzunge (102) in die Einstecköffnung der Steckerbuchse (20) eingreift, wobei die Federzungen (102) das Schirmblech eines in die Einstecköffnung eingesteckten Steckers (96) kontaktieren, und daß in wenigstens einer Seitenfläche der Aufnahme (18) wenigstens ein Lappen (22) ausgebildet ist, der von der Aufnahme (18) abgespreizt ist und das Sockeloberteil (12) oder die Aufnahme (18) einer anschließenden Steckerbuchse (20) federnd kontaktiert.

6. Anschlußdose nach Anspruch 1, dadurch gekennzeichnet, daß das Sockelunterteil (10) und das Sockeloberteil (12) durch gewindeformende Schrauben (52) miteinander verbunden und unter Druck zusammengehalten sind.

7. Anschlußdose nach Anspruch 1, dadurch gekennzeichnet, daß die Leiterplatte (16) zur leitenden Verbindung mit dem Gehäuse derart zwischen dem Sockelunterteil (10) und dem Sockeloberteil (12) eingespannt ist, daß ihre leitende Kaschierung (54) unter Druck leitend mit dem Sockelunterteil (10) und/ oder dem Sockeloberteil (12) in Berührung steht, wobei vorzugsweise an der mit der Kaschierung (54) der Leiterplatte (16) in Berührung kommenden Fläche des Sockelunterteils (10) und/oder des Sockeloberteils (12) Spitzen (56) angeformet sind, die in die Kaschierung (54) der Leiterplatte (16) eindringen.

8. Anschlußdose nach Anspruch 1, dadurch gekennzeichnet, daß an dem Sockelunterteil (10) ein Kontaktbügel (48), vorzugsweise aus einem federnden Metall mittels einer elektrisch leitenden Schraube angebracht ist, welcher das/die Kabel (44) an der freigelegten Schirmung übergreift und gegen das Sockelunterteil (10) preßt.

9. Anschlußdose nach Anspruch 1, dadurch gekennzeichnet, daß an dem Sockelunterteil (10) ein Zugentlastungsbügel (46) angeordnet ist, der das/die Kabel (44) an der Außenisolierung übergreift und an dem Sockelunterteil (10) festlegt.

10. Anschlußdose nach Anspruch 8 oder 9, dadurch gekennzeichnet, daß eine Klemmschraube (50) für einen Beidraht der Schirmung des Kabels/der Kabel (44) an dem Sockelunterteil (10) angeordnet ist.

11. Anschlußdose nach Anspruch 1, dadurch gekennzeichnet, daß wenigstens ein Kabel (44) an der Unterseite des Sockelunterteils (10) festgelegt ist, dessen Adern (70) um die Kante des Sockelunterteils (10) herum zu der Anschlußklemme (24) geführt sind und daß an der mit den Adern (70) in Berührung kommenden Kante des Sockelunterteils (10) eine Schutzschiene (72) aus einem nichtleitenden Material angeordnet ist.

12. Anschlußdose nach Anspruch 1, dadurch gekennzeichnet, daß an dem Sockelunterteil (10) eine zusätzliche Abschirmung (76; 104) aus Metall angeordnet ist, die das unabgeschirmte Ende eines an dem Sockelunterteil (10) festgelegten Kabels (44) überdeckt und in elektrisch leitender Berührung mit dem Sockelunterteil (10) und/oder dem Sockeloberteil (12) steht.

13. Anschlußdose nach den Ansprüchen 2 und 12, dadurch gekennzeichnet, daß die zusätzliche Abschirmung (76; 104) einstückig oder in Berührung an den Deckel (26) anschließt, so daß eine durchgehende Abschirmung von der Schirmung (62) des Kabels (44) bis zu der Anschlußklemme (24) gebildet ist.

14. Anschlußdose nach Anspruch 1, dadurch gekennzeichnet, daß an dem Sockelunterteil (10) ein Schirmkontaktteil (86) aus Metall in elektrisch leitender Berührung angeordnet ist, daß der Beidraht (64) der Schirmung eines an dem Sockelunterteil (10) festgelegten Kabels (44) in dieses Schirmkontaktteil (86) einführbar und in diesem festklemmbar ist, wobei das Schirmkontaktteil (86) ein Blechstanzteil ist, das an dem Sockelunterteil (10) anschraubbar ist und zwei Schenkel aufweist, zwischen denen der Beidraht (64) klemmbar ist.

## Claims

1. Connecting socket for screened cables, in particular for data transmission cables, having a lower base part (10) and an upper base part (12), having a printed circuit board (16) held between lower base part (10) and upper base part (12) and having at least one plug socket (20) and a connecting terminal (24) which are disposed on the printed circuit board (16) and are conductively connected to one another via said printed circuit board, characterized in that the lower base part (10) and the upper base part (12) are metallic diecast parts, in that the upper base part (12) is seated at its circumferential edge in electrically conducting contact on the lower base part (10), in that the lower base part (10) and the upper base part (12) form a housing which encloses at least the plug socket (20) and parts of the printed circuit board (16) as a screen, in that the printed circuit board (16) is in conducting contact with the housing (10, 12), in that a screen of the at least one plug socket (20) is conductively connected to the printed circuit board (16), and in that the screen of a cable (44) to be connected can be fixed in electrically conducting contact to the lower base part (10) or the upper base part (12).

2. Connecting socket according to Claim 1, characterized in that the printed circuit board (16) projects freely out of the upper base part (12) in a region cut out in the outer contour of the upper base part (12), in that the connecting terminal (24) is disposed on this exposed region of the printed circuit board (16) and in that an electrically conducting lid (26) which is in conducting contact with the lower base part (10) and/or the upper base part (12) covers the connecting terminal (24) at the free sides of the lower base part (10) and upper base part (12) as a screen.

3. Connecting socket according to Claim 1, characterized in that the lower base part (10) and the upper base part (12) overlap at the circumference which is in contact so that no rectilinearly continuous contacting joint is present.

4. Connecting socket according to Claim 1, characterized in that the screen of the at least one plug socket (20) comprises a receptacle (18) which is composed of electrically conducting material and which encloses said plug socket (20) and which is soldered to the printed circuit board (16).

5. Connecting socket according to Claim 4, characterized in that the receptacle (18), which is bent out of metal sheet, encloses the plug socket (20) at least at the four side walls and at the end face, in that the metal sheet of the receptacle (18) engages with at least one spring tongue (102) in the insertion opening of the plug socket (20), the spring tongues (102) making contact with the metal screen sheet of a plug (96) inserted in the insertion opening, and in that there is formed in at least one side surface of the receptacle (18) at least one tab (22) which is spread out by the receptacle (18) and makes resilient contact with the upper base part (12) or the receptacle (18) of a connecting plug socket (20).

6. Connecting socket according to Claim 1, characterized in that the lower base part (10) and the upper base part (12) are joined-to one another by self-tapping screws (52) and are held together under pressure.

7. Connecting socket according to Claim 1, characterized in that, for the purpose of conducting connection to the housing, the printed circuit board (16) is clamped between the lower base part (10) and the upper base part (12) in such a way that its conductive cladding (54) is in conducting contact under pressure with the lower base part (10) and/or the upper base part (12), tips (56) which penetrate into the cladding (54) of the printed circuit board (16) preferably being formed onto that surface of the lower base part (10) and/or of the upper base part (12) that comes into contact with the cladding (54) of the printed circuit board (16).

8. Connecting socket according to Claim 1, characterized in that a contact strap (48), preferably composed of a resilient metal, is mounted on the lower base part (10) by means of an electrically conducting screw, which contact strap fits over the cable or the cables (44) at the exposed screen and presses it against the lower base part (10).

9. Connecting socket according to Claim 1, characterized in that a stress relief strap (46) which engages over the cable/the cables (44) at the external insulation and fixes it/them to the lower base part (10) is disposed on the lower base part (10).

10. Connecting socket according to Claim 8 or 9, characterized in that a terminal-screw (50) is disposed on the lower base part (10) for a sheath wire of the screen of the cable or of the cables (44).

11. Connecting socket according to Claim 1, characterized in that there is fixed to the lower side of the lower base part (10) at least one cable (44) whose cores (70) are fed around the edge of the lower base part (10) to the connecting terminal (24) and in that a protective bar (72) of a non-conducting material is disposed at that edge of the lower base part (10) which comes into contact with the cores (70).

12. Connecting socket according to Claim 1, characterized in that there is disposed at the lower base part (10) an additional screen (76; 104) which is composed of metal and which covers the unscreened end of a cable (44) fixed to the lower base part (10) and is in electrically conducting contact with the lower base part (10) and/or the upper base part (12).

13. Connecting socket according to Claims 2 and 12, characterized in that the additional screen (76; 104) connects to the lid (26) either as an integral part or in contact so that a continuous screen is formed from the screen (62) of the cable (44) to the connecting terminal (24).

14. Connecting socket according to Claim 1, characterized in that a screen contact part (86) composed of metal is disposed in electrically conducting contact at the lower base part (10), in that the sheath wire (64) of the screen of a cable (44) fixed to the lower base part (10) can be fed into said screen contact part (86) and can be clamped in the latter, the screen contact part (86) being a punched metal sheet part which can be screwed to the lower base part (10) and has two limbs between which the sheath wire (64) can be clamped.

## Revendications

1. Boîte de raccordement pour des câbles blindés, notamment des câbles de transmission d'informations, comprenant une partie inférieure de socle (10) et une partie supérieure de socle (12), une plaque de circuit imprimé (16) maintenue entre la partie inférieure de socle (10) et la partie supérieure de socle (12), et au moins une prise (20) et une borne de raccordement (24) prévues sur la plaque de circuit imprimé (16) et reliées électriquement par celle-ci,
caractérisée en ce que
la partie inférieure de socle (10) et la partie supérieure de socle (12) sont des pièces en métal injecté sous pression, la partie supérieure (12) repose au niveau de son bord périphérique en contact électrique avec la partie inférieure (10) du socle,
la partie inférieure (10) et la partie supérieure (12) formant un boîtier entourant au moins la prise (20) et les parties de la plaque de circuit imprimé (16) en les protégeant,
la plaque de circuit imprimé (16) est en contact conducteur avec le boîtier (10, 12),
- un blindage au moins de la prise (20) est relié en conducteur électrique avec la plaque de circuit imprimé (16), et
- le blindage d'un câble (44) à brancher est fixé avec contact électrique sur la partie inférieure (10) ou la partie supérieure (12) du socle.

2. Boîte de branchement selon la revendication 1,
caractérisée en ce que
la plaque de circuit imprimé (16) comporte une zone dégagée au niveau du contour extérieur de la partie supérieure (12) de socle, cette partie dépassant librement de la partie supérieure (12) du socle,
- la borne de branchement (24) étant prévue sur cette partie libre de la plaque de circuit imprimé (16) et,
- un couvercle (26) conducteur électrique, est en contact conducteur avec la partie inférieure (10) et/ou la partie supérieure (12) du socle, ce couvercle recouvrant la borne de branchement (24) en les protégeant sur les côtés libres de la partie inférieure (10) et de la partie supérieure (12) du socle.

3. Boîte de branchement selon la revendication 1,
caractérisée en ce que
la partie inférieure (10) et la partie supérieure (12) du socle se chevauchent en contact de manière périphérique pour qu'il n'y ait pas de joint de contact droit et continu.

4. Boîte de branchement selon la revendication 1,
caractérisée en ce que
le blindage d'au moins une prise (20) comporte un logement (18) en matière conductrice d'électricité, entourant cette prise (20), ce logement étant soudé à la plaque de circuit imprimé (16).

5. Boîte de branchement selon la revendication 4,
caractérisée en ce que
le logement (18) en tôle repliée, entoure la prise (20) au moins sur les quatre parois latérales et sur la face frontale,
- la tôle du logement (18) pénètre avec au moins une languette élastique (102) dans l'orifice d'enfichage de la prise (20), les languettes élastiques (102) touchant la tôle formant blindage d'un connecteur (96) engagé dans l'orifice de la prise et,
- dans au moins une surface latérale du logement (18), il y a une languette (22), écartée du logement (18) et la partie supérieure (12) du socle ou le logement (18) est en contact élastique avec une prise (20) à brancher.

6. Boîte de branchement selon la revendication 1,
caractérisé en ce que
la partie inférieure (10) et la partie supérieure (12) du socle sont reliées par des vis taraudeuses (52) et sont maintenues en pression.

7. Boîte de branchement selon la revendication 1,
caractérisé en ce que
la plaque de circuit imprimé (16) est fixée entre la partie inférieure (10) et la partie supérieure (12) du socle pour réaliser une liaison conducteur avec le boîtier, de façon que son contre-collage (54), conducteur, soit en contact conducteur sous pression avec la partie inférieure (10) et/ou la partie supérieure (12) du socle, et de préférence des pointes (56) sont moulées au niveau de la surface de la partie inférieure (10) du socle et/ou de la partie supérieure (12) qui viennent en contact avec le contre-collage (54) de la plaque de circuit imprimé (16), des pointes (56) pénétrant dans le contre-collage (54) de la plaque de circuit imprimé (16).

8. Boîte de branchement selon la revendication 1,
caractérisée en ce que
la partie inférieure (10) du socle est munie d'un étrier de contact (48) de préférence en métal élastique fixé par l'intermédiaire d'une vis conductrice d'électricité, qui presse le ou les câble(s) (44) contre le blindage dégagé et contre la partie inférieure (10) du socle.

9. Boîte de branchement selon la revendication 1,
caractérisée par
un étrier à languette de traction (46) prévu sur la partie inférieure (10) du socle, étrier qui vient par-dessus le ou les câble(s) (44) au niveau de l'isolation extérieure et est fixé à la partie inférieure (10) du socle.

10. Boîte de branchement selon la revendication 8 ou 9,
caractérisée en ce que
une vis de serrage (50) pour un conducteur du blindage du câble ou des câbles (44) est prévue sur la partie inférieure (10) du socle.

11. Boîte de branchement selon la revendication 1,
caractérisée en ce qu'
au moins un câble (44) est fixé contre la face inférieure de la partie inférieure (10) du socle dont les brins (70) passent autour de l'arête de la partie inférieure (10) du socle pour arriver à la borne de branchement (24) et en ce qu'au niveau de l'arête venant en contact avec les brins (70) de la partie inférieure (10) du socle, il est prévu un rail de protection (72) en une matière non conductrice.

12. Boîte de branchement selon la revendication 1,
caractérisée par
un blindage (76, 104) en métal, supplémentaire prévu sur la partie inférieure (10) du socle, et qui recouvre l'extrémité non blindée d'un câble (44) fixé à la partie inférieure (10) du socle et est en contact conducteur électrique avec la partie inférieure (10) du socle et/ou la partie supérieure (12) du socle.

13. Boîte de branchement selon les revendications 2 et 12,
caractérisée en ce que
le blindage supplémentaire (76, 104) est relié en une seule pièce ou est en contact avec le couvercle (26) pour avoir un blindage continu entre le blindage (62) du câble (44) jusqu'à la borne de branchement (24).

14. Boîte de branchement selon la revendication 1,
caractérisée par
une pièce de contact formant blindage (86) en métal sur la partie inférieure (10) du socle qui est en contact électrique pour que le fil (64) du blindage d'un câble (44) fixé à la partie inférieure (10) du socle puisse être introduit dans cette pièce de contact de blindage (86) et y être serré, la partie de contact de blindage (86) étant une pièce en tôle estampée qui se visse sur la partie inférieure (10) du socle et comporte deux branches entre lesquelles se pince le fil de blindage (64).
